# EUROPEAN PATENT APPLICATION

(11) **EP 4 230 318 A1**
(43) Date of publication of application: **23.08.2023**
(21) Application number: 23155689.5
(22) Date of filing: 08.02.2023
(51) Int. Cl.: B08B 15/00, F16L 27/08

(54) **A SUPPORTING MOLDED CURVE FOR JIB EXTENSIONS FOR SUCTION ARMS**

(30) Priority: 22.02.2022 IT 202200003326
(71) Applicant: Airbox S.r.l., 00125 Roma (RM) (IT)
(72) Inventor: Bellieni, Lucio, 00122 Rome (RM) (IT); Piccioni, Paolo, 00135 Rome (RM) (IT)
(74) Representative: Fezzardi, Antonio

(57) **Abstract**

A curve usable to provide jib extensions for self-supporting suction arms comprises two semi-toroidal shells (01a, 01b) and a conveniently shaped, intermediate load-bearing septum (02), in which said curve is made by fastening said shells (01a, 01b) to each other, between which said intermediate load-bearing septum (02) is interposed.

## Description

The present invention relates to an innovative constructive embodiment consisting of a structural improvement of curves belonging to jib extensions used to support the suction arms in localized ventilation systems.

The need is known to remove pollutants by means of local suction which are generated in various forms, steps and physical statuses; usually, use is made of articulated arms or suction appendices which, depending on the position of the pollutant to be removed, may need to be extended up to the emission source.

This may be obtained through extensions which may rotate on a horizontal plane around a vertical axis placed close to the element of the fastening bracket.

This configuration allows reaching lengths which would otherwise not be possible with the articulated suction arm alone.

Several embodiments of such extensions are currently available on the market, all having the common need to combine the air conveying with the structural stability of the assembly.

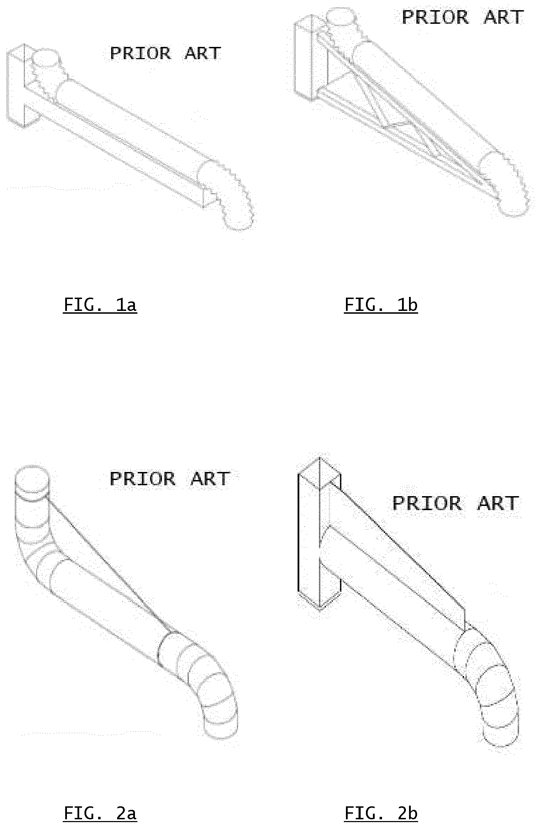

In general, the various embodiments available may be substantially grouped into two groups, representing two types of solutions:
(i) the first, shown in Figures 1a and 1b, in which the air conveying occurs by means of a tube with end connections connected to two flexible curves and in which the load-bearing structure is separate and almost always placed below the conveying tube;
(ii) the second, shown in Figures 2a and 2b, in which the load-bearing structure and the air-conveying one coincide and are formed by:
   (a) a 90° curve placed at the suction end;
   (b) a straight section of pipe made of carbon steel having round or square section;
   (c) a second 90° curve on the side of the fastening wall for conveying the flow into the main pipe; alternatively, a "T" introduction may be used, eliminating the second curve.

Such assemblies usually require the structural aid of cables, tensioners and/or longitudinal structural reinforcements to prevent deformations.

It is the main task of the present invention to overcome the limitations of the prior art by providing a curve provided with a rigid internal load-bearing structure which prevents deformations.

The solution proposed is a curve provided with a structural internal septum, i.e. with a structural inner partition.

A better understanding of the invention will be obtained from the following detailed description and with reference to the accompanying figures showing, by way of a non-limiting example, a preferred embodiment.

In the drawings:
Figures 1a and 1b show a known embodiment of the current jib extensions, with external load-bearing structure.
Figures 2a and 2b show a further known embodiment of the current jib extensions, provided with stiffening elements or tension cables.

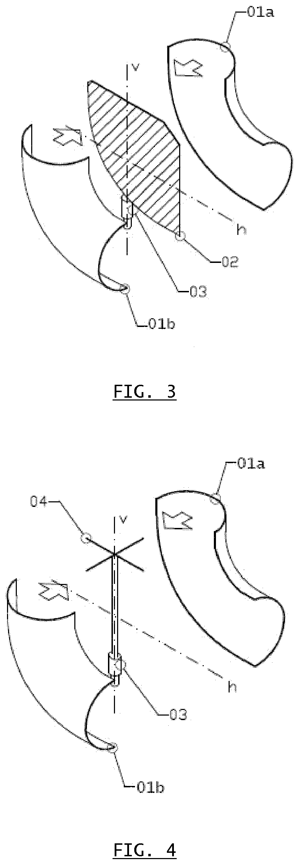

Figure 3 shows an exploded view of the curve according to the invention, showing the stiffening septum.
Figure 4, similar to Figure 3, shows an exploded view of the curve according to the invention, showing the rotation axis of the curve.

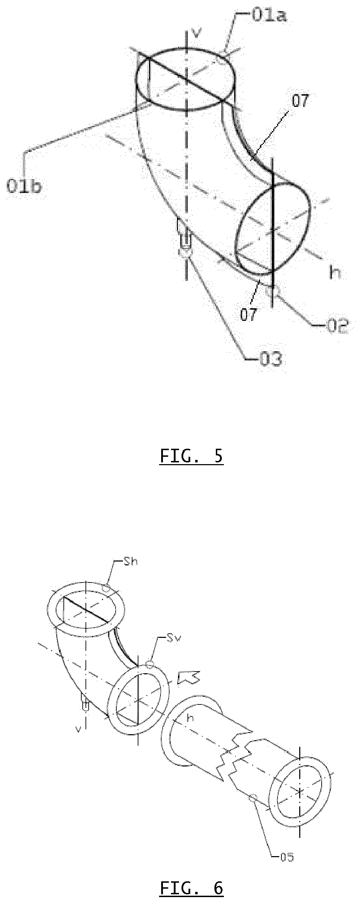

Figure 5 shows the curve according to the invention, in an assembled configuration.
Figure 6 shows the joining between the curve according to the invention and a tubular air conveying element.
Figure 7 shows a possible assembly of a jib extension with several rotation axes, provided with several curves according to the invention.
Figure 8 shows a possible assembly of a suction extension with a single rotation axis and provided with two curves according to the invention and with a filiform stay for calibrating the sharp rise.

The invention consists of a curve with an improved embodiment, provided with an intermediate load-bearing and structural septum (inner partition) to which the rotation axis is fastened.

According to the invention, the curve is provided by hot welding two shells (Ola, 01b) having semi-toroidal shape and length equal to one fourth of a toroid. A conveniently shaped, intermediate load-bearing septum (02) having planar shape corresponding to a circular quadrant, and which width is greater than the diameter of the shells, is provided between the shells. These elements are welded so that said intermediate septum (02) determines two symmetrical sections within the curve formed by the two shells (Ola, 01b) and so that the same septum (02) comes out of both sides of the curve with a flap (07).

In the described preferred embodiment, a rotation stem (03) integral with the load-bearing septum (02) and which end part comes out of the shell assembly is also provided; such a stem forms the rotation axis of the curve. The end of the stem coming out of the curve is the hinging point of the same to an external support structure.

In a variant of the invention, stem (03) is through passing and integral with the load-bearing septum and therefore, is completely within the curve.

In the preferred embodiment hereto described, the shells (Ola, 01b) and the load-bearing septum (02) are made of non-thick carbon steel in order to obtain a structural result which is substantially equivalent to the one which would be obtained using heavier construction.

According to the invention, jib extensions with a single joint may be provided by joining two curves made according to the invention, by means of a linear element (05) and in which one of the two curves is hinged to an external load-bearing structure, while the other one forms the suction mouth to which an articulated suction arm may be connected, for example.

Alternatively, jib extensions with multiple articulation may be provided by alternating the linear elements (05) with several curves made according to the invention, thus obtaining intermediate joints; the first curve will in any case be hinged to an external load-bearing structure and the last curve will form the suction mouth to which an articulated suction arm may be connected, for example. The curves interposed therebetween (first and last curve) form the intermediate rotation joints.

Lengths up to 8 meters may be reached with a jib extension, both with a single joint and with several intermediate joints.

A first peculiarity of the invention is given by the presence of the load-bearing intermediate septum (02) which advantageously allows the structure to be stiffened so as to compensate for the deformation without significant longitudinal deflections appearing due to the weight itself of the extension, and simultaneously obtaining a lightweight structure. This ability avoids the need to provide an additional external load-bearing structure.

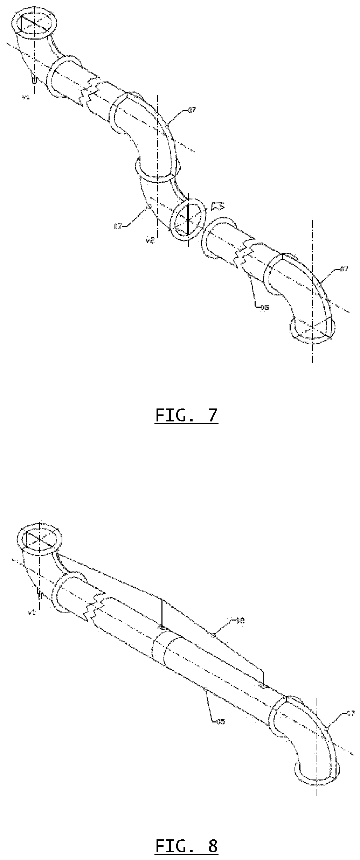

Should the specific application of the invention require particularly long longitudinal sections, the sharp rise of the jib extension may be corrected by inserting tie rods or filiform stays (08) constrained to flap (07) of the same structural septum (02) which, by means of an adjustable tensioner, allow calibrating the sharp rise of the extension; this allows controlling the planarity of the rotation section to which a possible suction arm may be connected without the need to stress and deform the conveying section of the load-bearing curve (Fig. 8).

Moreover, the presence of the load-bearing septum (02) determines a geometrical continuity such as to exactly identify the position both of the vertical axis and the horizontal axis of the curve; such a peculiarity allows accurately placing the rotation stem (03) outside the section determined by the two shells (01a and 01b). In other words, the "physical" stem is outside while the rotation axis, as a geometrical place, is lying on the load-bearing septum (2).

Such geometrical places are indeed lying and traceable on the same physical plane represented by the septum (02) itself.

This is particularly important for the rotation of cantilevered-constrained movable structures. Indeed, both the lightness and presence of a certain rotation axis are important for such structures.

Further, the solution proposed allows having exclusively circular sections for the entire jib extension instead of parts with square, rectangular or hexagonal sections, which coupling with the circular parts is more difficult and which aeraulic performance is lower than that of an equal circular section.

A second advantage is the possibility of identifying the rotation axis directly on the septum (02) within the curve, and this allows the rotation axis to be independent of the shells (01a and 01b) of the curve itself. In this manner, rotation axis alignment systems do not need to be used, avoiding the need to align the lower external stem and the upper conveying section as in known solutions.

Finally, the use of curves built according to the invention allows the assembly and disassembly operations of the articulated arm to be simplified because all elements are to be assembled by simple flanging with one another.

## Claims

1. A curve usable to provide jib extensions for self-supporting suction arms, **characterized in that** it comprises two semi-toroidal shells (Ola, 01b) and a conveniently-shaped intermediate load-bearing septum (02), wherein said curve is made by fastening said shells (Ola, 01b) to each other, between which said intermediate load-bearing septum (02) is interposed.

2. The curve according to the preceding claim, **characterized in that** said elements forming it are joined so that said intermediate septum (02) determines two symmetrical sections within the curve formed by the two shells (01a, 01b).

3. The curve according to one or more of the preceding claims, **characterized in that** said load-bearing septum (02) has a greater width than the diameter of the curve formed by the two shells (Ola, 01b) and therefore, it comes out of both sides of the curve itself with a flap (07).

4. The curve according to one or more of the preceding claims, **characterized in that** it has a rotation stem (03) which is integral with the septum.

5. The curve according to claims 3 and 4, **characterized in that** said rotation stem (03) is integral with the flap (07) of the septum (02) and is positioned outside the curve formed by the two shells (01a, 01b), thus allowing the rotation axis to be outside the curve.

6. The curve according to claim 4, **characterized in that** said rotation stem (03) is integral with the septum (02) and is positioned within the curve, in central position with respect to the circular section formed by the two shells (01a, 01b), thus allowing the rotation axis to be inside the curve.

7. The curve according to one or more of the preceding claims, **characterized in that** said load-bearing septum (02) is configured to structurally stiffen the curve so as to compensate for the deformation, thus avoiding the appearance of significant longitudinal deflections due to the weight of the extension and of the possible suction appendices thereof, thus simultaneously allowing a lightweight structure to be obtained.

8. The curve according to one or more of the preceding claims, **characterized in that** the shells (Ola, 01b) and the load-bearing septum (02) are made of non-thick carbon steel, thus resulting in less weight, less mechanical inertia and less cost.

9. A jib extension of a suction arm, **characterized in that** it is formed by at least a first rotatable curve according to one of claims 1 to 8, which curve is fastened to at least one linear tubular element (05) connected to said first curve to form a suction duct.

10. The jib extension according to the preceding claim, **characterized in that** it provides a second curve, similar to the first one, forming the suction mouth to which for example, an articulated suction arm can be connected.

11. The jib extension according to the preceding claim, **characterized in that** it provides a succession of linear tubular elements (05) for reaching increased lengths.

12. The jib extension according to claim 10 or 11, **characterized in that** it provides intermediate joints made by interposing at least one further curve between the first hinged curve and the second curve forming the suction mouth.

13. The jib extension according to one or more of claims 9 to 12, **characterized in that** it provides tie rods or filiform stays (08) constrained to the load-bearing septum (02) to calibrate the sharp rise of the extension by means of an adjustable tensioner.
